# DEMANDE DE BREVET EUROPEEN

(11) **EP 4 227 014 A1**
(43) Date de publication de la demande: **16.08.2023**
(21) Numéro de dépôt: 23155531.9
(22) Date de dépôt: 08.02.2023
(51) Int. Cl.: B21D 1/06, B21D 37/06, F16B 21/02

(54) **DISPOSITIF DE REDRESSEMENT DE TOLE A COUPLAGE RAPIDE**

(30) Priorité: 11.02.2022 FR 2201199
(71) Demandeur: GYS, 53940 Saint-Berthevin (FR)
(72) Inventeur: BOUYGUES, Bruno, 75016 PARIS (FR); GABILLARD, Mickael, 53970 MONTIGNE LE BRILLANT (FR); MANCEAU, David, 53230 COSSE LE VIVIEN (FR)
(74) Mandataire: Vidon Brevets & Stratégie

(57) **Abrégé**

L'invention concerne un dispositif de redressement (1) de tôle comprenant une barre (11) supportant une tige de traction (12) montée mobile sur la barre (11) et des moyens de commande du déplacement de la tige de traction (12) par rapport à la barre (11), la tige de traction (12) comprenant à une de ses extrémités des premiers moyens de solidarisation (13) à un outil de tirage (2) de la tôle à redresser, l'outil de tirage (2) comprenant des deuxièmes moyens de solidarisation (232), aptes à coopérer avec lesdits premiers moyens de solidarisation (13) de la tige de traction (12), les premiers moyens de solidarisation (13) étant reliés aux deuxièmes moyens de solidarisation (12) par une liaison pivot glissant.

## Description

### 1. Domaine technique

La présente invention concerne les dispositifs de redressement de tôle, et plus particulièrement les dispositifs destinés à redresser et à remettre en forme les carrosseries de véhicule qui ont été déformées suite à un choc ou un accident par exemple.

### 2. Art antérieur

On connaît les dispositifs de redressage manuels permettant la réparation de déformations de carrosserie automobile et qui comprennent une barre pourvue à ses deux extrémités de patins destinés à venir prendre appui sur la carrosserie. Une tige centrale de traction est montée coulissante en translation sur la barre et peut être déplacée par deux leviers pivotant sur lesquels l'opérateur peut agir. La tige de traction est adaptée par une de ses extrémités à être connectée à un outil de tirage comprenant des éléments de traction (crochets ou griffes) espacés montés sur un arbre de traction. Classiquement, l'outil de tirage est vissé sur un filetage disposé à l'extrémité de la tige de la barre, comme décrit dans les documents US 2007/056 349 A1 et CN 106 881 558 A, par exemple.

Selon un processus couramment utilisé par les carrossiers, on soude temporairement sur la tôle déformée des crochets qui sont reliés aux éléments de traction. En agissant sur les deux leviers, la tige de traction est relevée et les éléments de traction appliquent alors par le biais des crochets une force de traction à la carrosserie du véhicule pour la remettre en forme.

Un tel dispositif donne généralement satisfaction mais si l'outil de tirage n'est pas bien vissé, le filetage de la tige de la barre peut être endommagé sous l'effet d'un effort important de tirage.

Par ailleurs, la mise en place de l'outil de tirage par vissage est chronophage.

### 3. Présentation de l'invention

Pour ce faire, l'invention propose un dispositif de redressement de tôle comprenant une barre supportant une tige de traction montée mobile sur la barre et des moyens de commande du déplacement de la tige de traction par rapport à la barre, la tige de traction comprenant à une de ses extrémités des premiers moyens de solidarisation à un outil de tirage de la tôle à redresser, l'outil de tirage comprenant des deuxièmes moyens de solidarisation, aptes à coopérer avec lesdits premiers moyens de solidarisation de la tige de traction, les premiers moyens de solidarisation étant reliés aux deuxièmes moyens de solidarisation par une liaison pivot glissant.

L'invention propose ainsi un dispositif de redressage manuel apte à être utilisé dans des ateliers de réparation de carrosserie automobile qui comprend un système d'accroche pour barre de débosselage mettant en oeuvre une liaison réversible/démontable, du type pivot glissant avec deux degrés de liberté. Ce système de couplage est rapide à mettre en place et ne nécessite pas d'outil, contrairement à la liaison par vissage de l'art antérieur (liaison hélicoïdale avec un seul degré de mobilité).

Selon une mise en oeuvre particulière de l'invention, lesdits premiers moyens de solidarisation sont constitués d'un pion cylindrique et les deuxièmes moyens de solidarisation sont constitués d'un embout dans lequel vient se loger le pion cylindrique.

Selon une autre mise en oeuvre particulière de l'invention, lesdits deuxièmes moyens de solidarisation sont constitués d'un pion cylindrique et les premiers moyens de solidarisation sont constitués d'un embout dans lequel vient se loger le pion cylindrique.

Selon un aspect particulier de l'invention, l'embout comprend un alésage de réception du pion cylindrique et une rainure de passage de la tige de traction s'étendant perpendiculairement à l'alésage.

Selon un aspect particulier de l'invention, l'outil de tirage ou la tige de traction comprend des moyens de verrouillage/déverrouillage de la liaison entre les premiers moyens de solidarisation et les deuxièmes moyens de solidarisation.

Préférentiellement, l'outil de tirage porte une bague coulissante de verrouillage/déverrouillage de la liaison entre les premiers moyens de solidarisation et les deuxièmes moyens de solidarisation.

Selon une mise en oeuvre particulière de l'invention, la barre comprend deux profilés disposés parallèlement de sorte à définir entre eux un espace vide de largeur prédéterminée, le diamètre du pion étant inférieur à la largeur prédéterminée.

Avantageusement, la tige de traction est supportée par un chariot monté coulissant sur la barre.

L'invention concerne également un outil de tirage destiné à être mis en oeuvre dans un dispositif de redressement de tôle selon l'une des revendications précédentes, ledit dispositif comprenant une tige de traction présentant des premiers moyens de solidarisation, l'outil de tirage présentant des deuxièmes moyens de solidarisation, aptes à coopérer avec lesdits premiers moyens de solidarisation de la tige de traction, les deuxièmes moyens de solidarisation étant destinés à être reliés aux premiers moyens de solidarisation par une liaison pivot glissant.

### 4. Liste des figures

D'autres caractéristiques et avantages de l'invention apparaîtront à la lecture de la description suivante d'un mode de réalisation particulier, donné a titre de simple exemple illustratif et non limitatif, et des dessins annexés, parmi lesquels :
- [Fig.1] est une vue en perspective du corps d'un outil de tirage adapté pour être mis en oeuvre dans un dispositif de redressage de tôle conforme à l'invention ;
- [Fig.2] est une vue en perspective d'un outil de tirage adapté pour être mis en oeuvre dans un dispositif de redressage de tôle conforme à l'invention, l'outil de tirage étant pourvu d'une bague de verrouillage/déverrouillage qui est ici en position déverrouillée ;
- [Fig.3] est une vue en perspective de l'outil de tirage de la [Fig.2], la bague de verrouillage/déverrouillage étant ici en position verrouillée ;
- [Fig.4] est une vue en perspective de la tige de traction et de l'outil de tirage avant assemblage
- [Fig.5] montre le pion de la tige de traction engagé dans l'embout de l'outil de tirage avant rotation de ce dernier ;
- [Fig.6] montre le pion de la tige de traction engagé dans l'embout de l'outil de tirage après rotation de ce dernier, la bague de verrouillage/déverrouillage étant en position déverrouillée ;
- [Fig.7] montre le pion de la tige de traction engagé dans l'embout de l'outil de tirage après rotation de ce dernier, la bague de verrouillage/déverrouillage étant en position verrouillée ;
- [Fig.8] est une vue en perspective d'un dispositif de redressage de tôle conforme à l'invention.

### 5. Description d'un mode de réalisation de l'invention

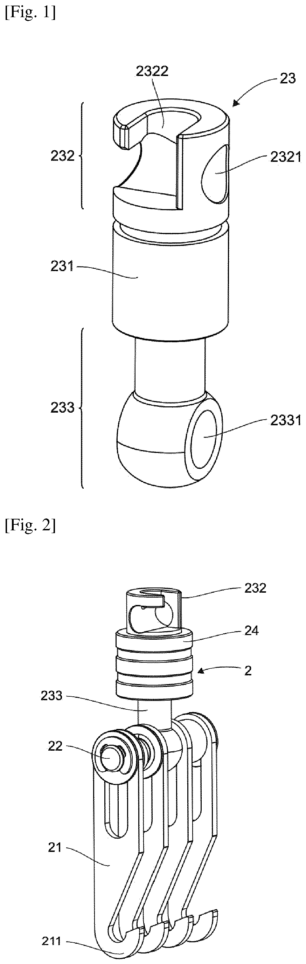

On décrit par la suite en relation avec les figures 1 à 8 un mode de réalisation d'un dispositif de redressage manuel permettant la réparation de déformations de carrosserie automobile.

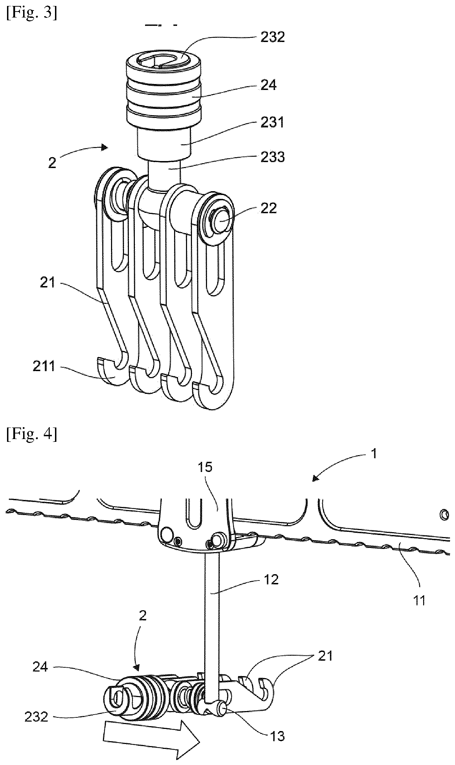

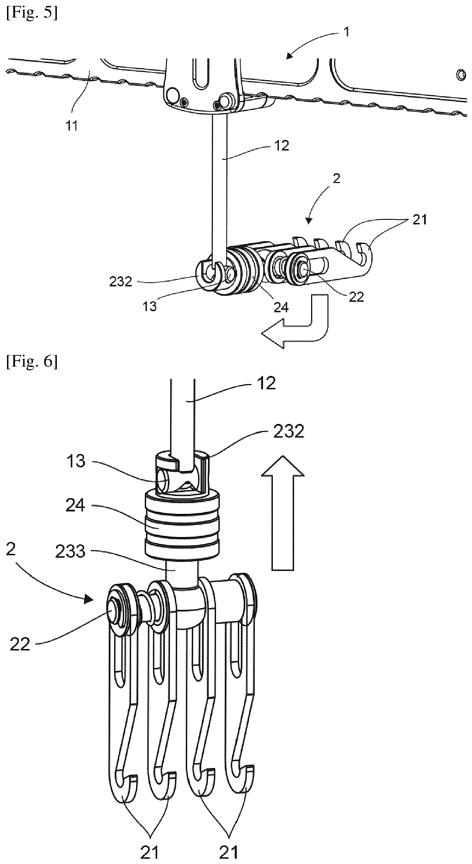

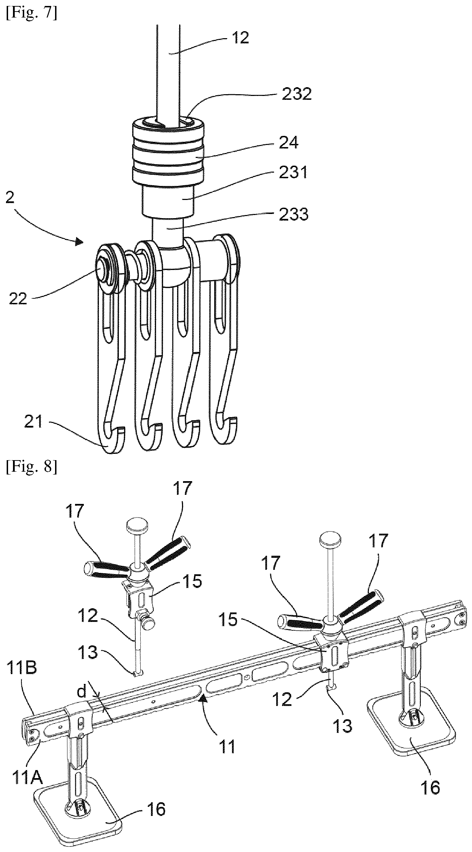

Ce dispositif de redressage 1, qui est visible sur la [Fig.8] et représenté partiellement sur les figures 4 et 5, comprend de façon connue une barre 11 dite de débosselage ou de tirage pourvue à ses deux extrémités de patins 16 destinés à venir prendre appui sur la carrosserie. Une tige de traction 12 centrale est montée coulissante en translation sur la barre 11, perpendiculairement à cette dernière, et peut être déplacée par deux leviers pivotant 17 sur lesquels l'opérateur peut agir. La tige de traction 12 est portée par un chariot 15 qui peut être déplacé manuellement le long de la barre de tirage 11.

Le dispositif de redressage 1 illustré sur la [Fig.8] met en oeuvre une barre double de tirage, sur laquelle deux chariots 13 amovibles peuvent être placés (un seul chariot de tirage ou trois chariots de tirage peuvent être placés sur une telle barre en règle générale).

La largeur de l'espace creux et traversant entre les deux profilés 11A, 11B constituant la barre de tirage 11 est référencée « d ».

La traction peut se faire par l'utilisation de deux leviers comme illustré sur la [Fig.8]. Dans une variante non illustrée, la tige de traction est filetée et son déplacement est assuré par un tronc de volant rotatif. Il est à noter que l'invention s'applique également aux dispositifs de redressage mettant en oeuvre une barre simple de tirage.

La tige de traction 12 est adaptée par une de ses extrémités à être connectée à un outil de tirage ou de traction 2 comprenant des éléments de traction (crochets) 21 espacés montés sur un arbre de traction 22.

Avantageusement, l'outil de tirage 2 est assemblé sur un support 13 porte-outil disposé à l'extrémité libre de la tige de traction 12 de la barre 11. Ce support 13 porte-outil prend la forme d'un axe/pion cylindrique s'étendant perpendiculairement à la tige de traction 12.

Comme illustré sur la [Fig.1], l'outil de tirage 2 comprend un corps 23 se présentant sous la forme d'une tige et comprend une partie centrale 231 cylindrique. A une extrémité de cette partie centrale 231 est situé un premier embout ou manchon 232 cylindrique et à l'extrémité opposée un deuxième embout 233 dans lequel est ménagé un alésage 2331 de passage de l'arbre de traction 22, l'alésage 2331 s'étendant perpendiculairement à l'axe longitudinal du corps 23. Comme illustré sur les figures 2 et 3, une bague de verrouillage/déverrouillage 25 est montée coulissante sur le corps 23 entre une position de déverrouillage (où elle entoure la partie centrale 231) et une position de verrouillage (où elle entoure l'embout 232 et une portion de la partie centrale 231). L'embout 232 creux présente un alésage 2321 ménagé diamétralement et qui s'étend perpendiculairement à l'axe longitudinal du corps 23 ([Fig.1]). L'embout 232 présente également une rainure 2322 perpendiculaire à l'alésage 241 (et donc parallèle à l'axe longitudinal du corps 23).

Les éléments de traction 21, qui sont tous identiques et au nombre de quatre dans le mode de réalisation illustré, contiennent un doigt ou griffe 211 dans la zone de leur extrémité opposée à l'arbre de traction 22.

Les doigts 211 viennent s'engager viennent s'engager sur une tige passée à travers des anneaux (non représentés) qui sont soudés temporairement sur la tôle déformée/à redresser. En agissant sur les deux leviers du dispositif de redressage 1, ou sur le tronc de volant rotatif lorsque la tige de traction est filetée, la tige de traction 12 est relevée et les éléments de traction 21 appliquent alors par le biais des crochets une force de traction à la carrosserie du véhicule pour la remettre en forme.

On détaille ci-après l'assemblage rapide de l'outil de tirage 2 sur la tige de traction 12 du dispositif de redressage 1.

Comme illustré sur les figures 4 à 7, on positionne l'embout 232 de l'outil de tirage 2 à proximité du pion de la tige de traction 12 formant support 13 porte-outil ([Fig.4]).

On engage ensuite le pion formant support 13 porte-outil dans l'alésage 2321 de l'embout 232 ([Fig.5]). On pivote ensuite l'outil de tirage 2 autour de l'axe pion formant support 13 porte-outil (flèche de la [Fig.5]) de sorte à ce que l'outil de tirage 2 soit situé dans le prolongement de la tige de traction 12 ([Fig.6]). Lors de cette rotation, la tige de traction 12 vient se positionner dans la rainure 2322 de l'embout 232, le pion formant support 13 porte-outil restant positionné dans l'alésage 2321 de l'embout 232.

Cet assemblage rapide est donc assuré en deux temps, en coulissant l'embout 232 formant élément femelle (deuxièmes moyens de solidarisation sur le pion formant élément mâle (premiers moyens de solidarisation), puis en pivotant l'embout 232 autour du pion.

On relève alors la bague de verrouillage/déverrouillage 25 coulissante (flèche de la [Fig.6]) pour qu'elle vienne se positionner autour de l'embout 232 de sorte à verrouiller ou bloquer le pion et l'embout 232 en position engagée ([Fig.7]). Le verrouillage de la bague coulissante est assuré par un joint à l'intérieur de la bague, ce qui la bloque en position par frottement.

Une fois cette opération d'assemblage effectuée, le dispositif de redressage de l'invention est placé sur un endroit de la tôle à côté de l'enfoncement et permet la remise en forme de tôle déformée par traction comme décrit précédemment.

Ce système d'accroche pour barre de débosselage met en oeuvre une liaison réversible/démontable, du type pivot glissant avec deux degrés de liberté, qui est rapide et ne nécessite pas d'outil, contrairement à la liaison par vissage de l'art antérieur (liaison hélicoïdale avec un seul degré de mobilité).

La fixation de l'outil de tirage est également très robuste. Elle est compatible avec l'utilisation d'une barre simple de tirage, mais aussi une barre double de tirage sur laquelle des chariots amovibles peuvent être ajoutés (jusqu'à deux ou trois chariots de tirage peuvent être placés sur une barre).

Dans l'exemple illustré sur la [Fig.8], la dimension du pion formant support 13 porte-outil est choisie de manière à pouvoir passer à travers la barre double de redressage ou de tirage, ce qui permet l'utilisation de chariots de tirage amovibles, pouvant facilement être placés ou retirés de la barre. Le diamètre du pion formant support 13 est ici inférieure à la distance « d » entre les deux profilés 11A, 11B formant barre double de tirage, ce qui permet d'introduire ce pion entre les profilés pour placer le chariot 15 sur la barre double.

Dans un autre mode de réalisation de l'invention, la tige de traction peut porter des moyens de solidarisation femelle et l'outil de tirage peut porter des moyens de solidarisation mâle.

Il est à noter par ailleurs que le système d'accroche rapide peut ne pas mettre en oeuvre de bague de verrouillage/déverrouillage ou bien peut mettre en oeuvre un autre dispositif de verrouillage/déverrouillage de la liaison entre la tige de traction et l'outil de tirage.

Ces moyens de verrouillage/déverrouillage peuvent être mis en oeuvre sur l'outil de tirage ou sur la tige de traction, ou les deux s'ils sont en deux parties.

## Revendications

1. Dispositif de redressement (1) de tôle comprenant un outil de tirage (2), une barre (11) supportant une tige de traction (12) montée mobile sur la barre (11) et des moyens de commande du déplacement de la tige de traction (12) par rapport à la barre (11), la tige de traction (12) comprenant à une de ses extrémités des premiers moyens de solidarisation (13) dudit outil de tirage (2) de la tôle à redresser, ledit outil de tirage (2) comprenant des deuxièmes moyens de solidarisation (232), aptes à coopérer avec lesdits premiers moyens de solidarisation (13) de la tige de traction (12), les premiers moyens de solidarisation (13) étant reliés aux deuxièmes moyens de solidarisation (12) par une liaison pivot glissant.

2. Dispositif de redressement de tôle selon la revendication 1, **caractérisé en ce que** lesdits premiers moyens de solidarisation (13) sont constitués d'un pion cylindrique et les deuxièmes moyens de solidarisation (12) sont constitués d'un embout dans lequel vient se loger le pion cylindrique.

3. Dispositif de redressement de tôle selon la revendication 1, **caractérisé en ce que** lesdits deuxièmes moyens de solidarisation sont constitués d'un pion cylindrique et les premiers moyens de solidarisation sont constitués d'un embout dans lequel vient se loger le pion cylindrique.

4. Dispositif de redressement de tôle selon la revendication 2 ou 3, **caractérisé en ce que** l'embout comprend un alésage (2321) de réception du pion cylindrique et une rainure (2322) de passage de la tige de traction s'étendant perpendiculairement à l'alésage (2321).

5. Dispositif de redressement de tôle selon l'une des revendications précédentes, **caractérisé en ce que** l'outil de tirage (2) ou la tige de traction (12) comprend des moyens de verrouillage/déverrouillage de la liaison entre les premiers moyens de solidarisation (13) et les deuxièmes moyens de solidarisation (12).

6. Dispositif de redressement de tôle selon la revendication 5, **caractérisé en ce que** l'outil de tirage (2) porte une bague (24) coulissante de verrouillage/déverrouillage de la liaison entre les premiers moyens de solidarisation (13) et les deuxièmes moyens de solidarisation (12).

7. Dispositif de redressement de tôle selon l'une des revendications 3 à 6, **caractérisé en ce que** la barre (11) comprend deux profilés (11A, 11B) disposés parallèlement de sorte à définir un espace vide entre eux de largeur (d) prédéterminée, le diamètre du pion étant inférieur à la largeur (d).

8. Dispositif de redressement de tôle selon l'une des revendications précédentes, **caractérisé en ce que** la tige de traction (12) est supportée par un chariot (15) monté coulissant sur la barre (11).

9. Outil de tirage (2) destiné à être mis en oeuvre dans un dispositif de re- dressement de tôle selon l'une des revendications précédentes, ledit dispositif comprenant une tige de traction (12) présentant des premiers moyens de solidarisation (13), l'outil de tirage (2) présentant des deuxièmes moyens de solidarisation (232), aptes à coopérer avec lesdits premiers moyens de solidarisation (13) de la tige de traction (12), les deuxièmes moyens de solidarisation (12) étant destinés à être reliés aux premiers moyens de solidarisation (13) par une liaison pivot glissant.
